# EUROPEAN PATENT APPLICATION

(11) **EP 4 394 451 A1**
(43) Date of publication of application: **03.07.2024**
(21) Application number: 22871797.1
(22) Date of filing: 06.09.2022
(51) Int. Cl.: G01S 19/42, G01C 21/30

(54) **POSITIONING INFORMATION PROCESSING METHOD AND APPARATUS**

(30) Priority: 26.09.2021 CN 202111131227
(71) Applicant: Huawei Technologies Co., Ltd., Shenzhen, Guangdong 518129 (CN)
(72) Inventor: LI, Jun, Shenzhen, Guangdong 518129 (CN); DING, Tian, Shenzhen, Guangdong 518129 (CN); FAN, Yuwei, Shenzhen, Guangdong 518129 (CN)
(74) Representative: Isarpatent
(86) International application number: PCT/CN2022/117184
(87) International publication number: WO 2023/045748

(57) **Abstract**

A positioning information processing method and apparatus (900, 1000) are disclosed, and are used to correct positioning information. A first apparatus (201) determines first positioning information corresponding to a location of the first apparatus (201) (S101), where a coordinate range of the first positioning information is in a first area. The first apparatus (201) sends first information to a second apparatus (202) (S102), where the first information indicates the first area. The first apparatus (201) receives map topology information of the first area from the second apparatus (202) (S103). The first apparatus (201) corrects the first positioning information based on the map topology information, to obtain second positioning information (S104). The first apparatus (201) corrects the positioning information based on the map topology information sent by the second apparatus (202), without a need to transmit coordinate point information of the location of the first apparatus (201). This avoids a risk of privacy information leakage.

## Description

This application claims priority to Chinese Patent Application No. 202111131227.6, filed with the China National Intellectual Property Administration on September 26, 2021 and entitled "POSITIONING INFORMATION PROCESSING METHOD AND APPARATUS", which is incorporated herein by reference in its entirety.

### TECHNICAL FIELD

This application relates to the field of wireless technologies, and in particular, to a positioning information processing method and apparatus.

### BACKGROUND

With development of a global navigation satellite system (global navigation satellite system, GNSS) in engineering service, business service and other fields, there are rapidly growing demands for a high-precision positioning technology in various fields. However, during practical application, due to impact of factors such as observation time, an atmospheric environment, and a geographical environment, various errors may occur in positioning information collected by a positioning device. Therefore, when a high-precision positioning service is needed, it is usually a necessary step to correct, by using a positioning correction technology, the positioning information collected by the positioning device.

Currently, the positioning correction technology can be used to correct the positioning information based on map information, to implement high-precision positioning. After the positioning device collects the positioning information, the positioning device may send the positioning information to a second apparatus. Thereafter, the second apparatus corrects the positioning information based on stored map information to calibrate the error, and sends corrected positioning information to the positioning device.

However, in the foregoing implementation, because a positioning information correction process is performed on the second apparatus, the positioning device needs to transmit coordinate point information, corresponding to a positioning location, in the positioning information to the second apparatus. The transmission process may cause a risk of privacy information leakage, which affects user experience.

### SUMMARY

Embodiments of this application provide a positioning information processing method and apparatus, to correct positioning information, avoid a risk of privacy information leakage, and improve user experience.

A first aspect of embodiments of this application provides a positioning information processing method. The method is performed by a first apparatus, or the method is performed by some components (for example, a processor, a chip, or a chip system) in a first apparatus, or the method may be implemented by a logical module or software that can implement all or some functions of a first apparatus. In the first aspect and the possible implementations of the first aspect, an example in which the method is performed by the first apparatus is used for description. In the method, the first apparatus determines first positioning information corresponding to a location of the first apparatus, where a coordinate range of the first positioning information is in a first area. The first apparatus sends first information to a second apparatus, where the first information indicates the first area. The first apparatus receives map topology information of the first area from the second apparatus. The first apparatus corrects the first positioning information based on the map topology information, to obtain second positioning information.

Based on the foregoing technical solution, in a positioning information correction process of the first apparatus, the first apparatus sends the first information to the second apparatus to indicate the coordinate range of the first positioning information corresponding to the location of the first apparatus, so that the second apparatus determines the map topology information of the first area based on the first information, and sends the map topology information of the first area to the first apparatus. Then, the first apparatus corrects, based on the map topology information, first positioning information corresponding to a positioning location of the first apparatus, to obtain the second positioning information. The first apparatus can perform the positioning information correction process based on the map topology information sent by the second apparatus, without a need to transmit coordinate point information of the location of the first apparatus. This avoids a risk of privacy information leakage.

In a possible implementation of the first aspect, the map topology information includes road topology information of at least one road corresponding to the first area. That the first apparatus corrects the first positioning information based on the map topology information, to obtain second positioning information includes: The first apparatus determines target road topology information from the road topology information, where the target road topology information is road topology information of a road on which the location of the first apparatus is located. The first apparatus corrects the first positioning information based on the target road topology information, to obtain the second positioning information.

Optionally, the first apparatus is a vehicle-mounted terminal that performs positioning on a road, or the first apparatus is another terminal that performs positioning on a road.

Based on the foregoing technical solution, the map topology information received by the first apparatus from the second apparatus includes the road topology information of the at least one road corresponding to the first area. In a first positioning information correction process, the first apparatus can specifically determine, based on the map topology information, the target road topology information of the road on which the location of the first apparatus is located, and further correct the first positioning information based on the target road topology information, to obtain the second positioning information. That is, based on the road topology information in the map topology information, the first apparatus corrects the positioning information from a road dimension.

In a possible implementation of the first aspect, the target road topology information includes road width information of the road on which the location of the first apparatus is located. That the first apparatus corrects the first positioning information based on the target road topology information, to obtain the second positioning information includes: The first apparatus corrects the first positioning information based on the road width information in the first positioning information, to obtain the second positioning information, where a coordinate point corresponding to the second positioning information is located inside an area of the target road topology information.

Based on the foregoing technical solution, the target road topology information in the map topology information received by the first apparatus from the second apparatus includes the road width information of the road on which the location of the first apparatus is located. Because an error may exist in the first positioning information that corresponds to the location of the first apparatus and that is determined by the first apparatus, coordinates corresponding to the first positioning information may step-change on a road (for example, step-change on a plurality of roads, or step-change to a location outside the road). In the positioning information correction process, the first apparatus corrects, based on the road width information, a coordinate point that corresponds to the first positioning information and that is located outside the area of the target road topology information, so that a coordinate point that corresponds to the second positioning information and that is obtained through correction is included in the area of the target road topology information. In other words, the positioning information correction process performed by the first apparatus may include: The first apparatus corrects, based on the road width information in the target road topology information, a coordinate point that deviates from an area in which the road is located, to obtain the coordinate point in the area in which the road is located.

In a possible implementation of the first aspect, that the first apparatus corrects the first positioning information based on the target road topology information, to obtain the second positioning information includes: The first apparatus corrects the first positioning information based on the road width information in the first positioning information, to obtain the second positioning information.

Optionally, a curve on which the coordinate point corresponding to the second positioning information is located is a first curve, and a curvature of the first curve is less than a first threshold.

Based on the foregoing technical solution, because an error may exist in the first positioning information that corresponds to the location of the first apparatus and that is determined by the first apparatus, the coordinates corresponding to the first positioning information may step-change inside a road. Therefore, in the positioning information correction process, the first apparatus corrects, based on the target road topology information, a coordinate point whose curvature is greater than the first threshold and that is located on an initial curve including a coordinate point corresponding to the first positioning information, so that a curve on which a coordinate point corresponding to the second positioning information obtained through correction is located is the first curve, and a curvature of the first curve is less than the first threshold. In other words, the positioning information correction process performed by the first apparatus may include: The first apparatus corrects, based on the target road topology information, a coordinate point that may step-change inside the road.

In a possible implementation of the first aspect, that the first apparatus corrects the first positioning information based on the road width information in the first positioning information, to obtain the second positioning information includes: The first apparatus corrects the first positioning information based on movement orientation corresponding to the location of the first apparatus and the road width information, to obtain the second positioning information.

Based on the foregoing technical solution, in the positioning information correction process, because an error may exist in the first positioning information that corresponds to the location of the first apparatus and that is determined by the first apparatus, the coordinates corresponding to the first positioning information may step-change on (retrograde) lanes of different orientation on the road. To be specific, the first apparatus further determines, based on the movement orientation of the first apparatus and the road width information, a road on which the location of the first apparatus is located in a movement process, and corrects a coordinate point that corresponds to the first positioning information and that is located outside an area in which the road is located, so that a coordinate point corresponding to the second positioning information obtained through correction is located inside the area in which the road is located.

In a possible implementation of the first aspect, the at least one road includes a plurality of roads, and the road topology information includes a connection relationship between the plurality of roads. That the first apparatus determines target road topology information from the road topology information includes: The first apparatus determines the target road topology information from the road topology information based on the connection relationship between the plurality of roads.

Based on the foregoing technical solution, the road topology information in the map topology information received by the first apparatus from the second apparatus includes the connection relationship between the plurality of roads corresponding to the first area. Because an error may exist in the first positioning information that corresponds to the location of the first apparatus and that is determined by the first apparatus, the coordinates corresponding to the first positioning information may step-change on the plurality of roads. Therefore, the first apparatus determines, based on the connection relationship between the plurality of roads, the road on which the location of the first apparatus is located, and determines the target road topology information corresponding to the road.

In a possible implementation of the first aspect, the map topology information further includes building topology information of at least one building corresponding to the first area. That the first apparatus corrects the first positioning information based on the target road topology information, to obtain the second positioning information includes: The first apparatus corrects the first positioning information based on the target road topology information, to obtain third positioning information. The first apparatus corrects the third positioning information based on the building topology information, to obtain the second positioning information, where the coordinate point corresponding to the second positioning information is located outside an area in which the at least one building is located.

Optionally, the first apparatus is a vehicle-mounted terminal that performs positioning on a road, or the first apparatus is another terminal that performs positioning on a road, or the first apparatus is a terminal that performs positioning outside a building.

Optionally, a coordinate point corresponding to the third positioning information is located inside the area of the target road topology information.

Based on the foregoing technical solution, in addition to the road topology information of the at least one road corresponding to the first area, the map topology information received by the first apparatus from the second apparatus includes the building topology information of the at least one building corresponding to the first area. In the first positioning information correction process, the first apparatus can specifically correct the first positioning information based on the map topology information and the target road topology information. After obtaining the third positioning information, the first apparatus corrects the third positioning information based on the building topology information, to obtain the second positioning information, where the coordinate point corresponding to the second positioning information is located outside the area in which the at least one building is located. That is, based on the building topology information in the map topology information, the first apparatus corrects the positioning information from a building dimension. Further, based on the road topology information and the building topology information in the map topology information, the first apparatus corrects the positioning information from a plurality of dimensions. This can effectively improve a correction effect of the positioning information and improve positioning precision.

In a possible implementation of the first aspect, the at least one road includes a first road, where the first road is located inside the first area.

Based on the foregoing technical solution, the at least one road corresponding to the first area may include at least the first road located inside the first area, so that the first apparatus performs the positioning information correction process based on road topology information of a road inside the first area.

In a possible implementation of the first aspect, the at least one road further includes a second road, where the second road is located outside the first area and the second road intersects a first road; or the at least one road further includes a third road, where the third road is located outside the first area and the third road intersects a second road.

Based on the foregoing technical solution, in addition to the first road located inside the first area, the at least one road corresponding to the first area may include another road associated with the first road. Because an error may exist in the first positioning information that corresponds to the location of the first apparatus and that is determined by the first apparatus, actual coordinates corresponding to the first positioning information may be located on a road outside the first area. In the foregoing technical solution, in addition to the first road inside the first area, a road indicated by the road topology information included in the map topology information received by the first apparatus further includes another road related to the first road, to improve correction precision of the positioning information.

In a possible implementation of the first aspect, the map topology information further includes building topology information of at least one building corresponding to the first area. That the first apparatus corrects the first positioning information based on the map topology information, to obtain second positioning information includes: The first apparatus corrects the first positioning information based on the building topology information, to obtain the second positioning information, where a coordinate point corresponding to the second positioning information is located outside an area in which the at least one building is located.

Optionally, the first apparatus is a vehicle-mounted terminal that performs positioning on a road, or the first apparatus is another terminal that performs positioning on a road, or the first apparatus is a terminal that performs positioning outside a building.

Based on the foregoing technical solution, the map topology information received by the first apparatus from the second apparatus includes the building topology information of the at least one building corresponding to the first area. In a first positioning information correction process, the first apparatus can specifically correct the first positioning information based on the building topology information, to obtain the second positioning information, where the coordinate point corresponding to the second positioning information is located outside the area in which the at least one building is located. That is, based on the building topology information in the map topology information, the first apparatus corrects the positioning information from a building dimension.

In a possible implementation of the first aspect, the at least one building includes a plurality of buildings, and the building topology information includes a connection relationship between the plurality of buildings.

Based on the foregoing technical solution, the building topology information in the map topology information received by the first apparatus from the second apparatus includes the connection relationship between the plurality of buildings corresponding to the first area. Because an error may exist in the first positioning information that corresponds to the location of the first apparatus and that is determined by the first apparatus, the coordinates corresponding to the first positioning information may step-change and be positioned to an inside of the building. However, in the technical solution, the building topology information includes the connection relationship between the plurality of buildings corresponding to the first area, so that the first apparatus can correct a step-changed coordinate point based on the connection relationship between the plurality of buildings.

In a possible implementation of the first aspect, the first information includes coordinate information corresponding to the first area, or the first information includes identification information of the first area, or the first information includes index information of the first area.

Optionally, the first area is a rectangular area, a circular area, an oval area, or another regularly-shaped area.

Optionally, the first area is an irregularly-shaped area.

Based on the foregoing technical solution, the first apparatus determines the first positioning information corresponding to the location of the first apparatus, where the coordinate range of the first positioning information is in the first area. Then, the first apparatus can indicate the first area to the second apparatus in the foregoing plurality of manners. This improves flexibility of solution implementation.

A second aspect of embodiments of this application provides a positioning information processing method. The method is performed by a second apparatus, or the method is performed by some components (for example, a processor, a chip, or a chip system) in a second apparatus, or the method may be implemented by a logical module or software that can implement all or some functions of a second apparatus. In the second aspect and the possible implementations of the second aspect, an example in which the method is performed by the second apparatus is used for description. In the method, the second apparatus receives first information from a first apparatus, where the first information indicates a first area. The second apparatus determines map topology information of the first area based on the first information. The second apparatus sends the map topology information to the first apparatus.

Based on the foregoing technical solution, in a positioning information correction process of the first apparatus, after the second apparatus receives the first information sent by the first apparatus to indicate a coordinate range of first positioning information corresponding to a location of the first apparatus, the second apparatus determines the map topology information of the first area based on the first information, and sends the map topology information of the first area to the first apparatus, so that the first apparatus corrects, based on the map topology information, first positioning information corresponding to a positioning location of the first apparatus, to obtain second positioning information. Compared with a solution in which the first apparatus sends coordinate point information, corresponding to the positioning location, in the positioning information to the second apparatus, to implement a positioning information correction process, in this solution, the first apparatus can perform the positioning information correction process based on the map topology information sent by the second apparatus, without a need to transmit coordinate point information of the location of the first apparatus. This avoids a risk of privacy information leakage and improves user experience.

In a possible implementation of the second aspect, that the second apparatus determines map topology information of the first area based on the first information includes: The second apparatus obtains geographic information system (geographic information system, GIS) map information corresponding to the first area, where the GIS map information includes coordinate point information corresponding to the first area. The second apparatus determines the map topology information based on the GIS map information.

Based on the foregoing technical solution, in a process of determining the map topology information of the first area, the second apparatus can obtain the GIS map information based on the first information, and construct the map topology information based on the coordinate point information corresponding to the first area in the GIS map information. Compared with the GIS map information that includes the coordinate point information, the map topology information includes a connection relationship between some or all of the coordinate point information in addition to the coordinate point information, so as to indicate, to the first apparatus based on the map topology information, topology information of at least one road and/or at least one building corresponding to the first area.

Optionally, that the second apparatus determines map topology information of the first area based on the first information includes: The second apparatus determines the map topology information of the first area in a prestored database based on the first information.

In a possible implementation of the second aspect, the map topology information includes road topology information of at least one road corresponding to the first area.

Optionally, the road topology information includes coordinate point information of the at least one road.

Based on the foregoing technical solution, the map topology information determined by the second apparatus includes the road topology information of the at least one road corresponding to the first area. After the second apparatus sends the map topology information to the first apparatus, in a first positioning information correction process, the first apparatus can specifically determine, based on the map topology information, target road topology information of a road on which the location of the first apparatus is located, and further correct the first positioning information based on the target road topology information, to obtain the second positioning information. That is, based on the road topology information in the map topology information, the first apparatus corrects the positioning information from a road dimension. Further, based on the road topology information and building topology information in the map topology information, the first apparatus corrects the positioning information from a plurality of dimensions. This can effectively improve a correction effect of the positioning information and improve positioning precision.

In a possible implementation of the second aspect, the road topology information further includes at least one of the following: road width information of the at least one road; or a connection relationship between a plurality of roads in the at least one road.

Based on the foregoing technical solution, when the road topology information includes the road width information of the at least one road, after the second apparatus sends the map topology information to the first apparatus, in the positioning information correction process, the first apparatus corrects, based on the road width information, a coordinate point that corresponds to the first positioning information and that is located outside an area of the target road topology information, so that a coordinate point that corresponds to the second positioning information and that is obtained through correction is included in the area of the target road topology information. In other words, the positioning information correction process performed by the first apparatus may include: The first apparatus corrects, based on the road width information in the target road topology information, a coordinate point that deviates from an area in which the road is located, to obtain the coordinate point in the area in which the road is located. In addition, when the road topology information includes the connection relationship between the plurality of roads in the at least one road, after the second apparatus sends the map topology information to the first apparatus, the first apparatus can determine, based on the connection relationship between the plurality of roads, the road on which the location of the first apparatus is located, and determine the target road topology information corresponding to the road.

In a possible implementation of the second aspect, the at least one road includes a first road, where the first road is located inside the first area.

Based on the foregoing technical solution, the at least one road corresponding to the first area may include at least the first road located inside the first area, so that the first apparatus performs the positioning information correction process based on road topology information of a road inside the first area.

In a possible implementation of the second aspect, the at least one road further includes a second road, where the second road is located outside the first area and the second road intersects a first road; or the at least one road further includes a third road, where the third road is located outside the first area and the third road intersects a second road.

Optionally, the at least one road includes the first road and the second road, or the at least one road includes the first road and the second road, and the at least one road does not include the third road.

Based on the foregoing technical solution, in addition to the first road located inside the first area, the at least one road corresponding to the first area may include another road associated with the first road. Because an error may exist in the first positioning information that corresponds to the location of the first apparatus and that is determined by the first apparatus, actual coordinates corresponding to the first positioning information may be located on a road outside the first area. In the foregoing technical solution, in addition to the first road inside the first area, a road indicated by the road topology information included in the map topology information received by the first apparatus further includes another road related to the first road, to improve correction precision of the positioning information.

In a possible implementation of the second aspect, the map topology information includes building topology information of at least one building corresponding to the first area.

Optionally, the building topology information includes coordinate point information of the at least one building.

Based on the foregoing technical solution, the map topology information sent by the second apparatus includes the building topology information of the at least one building corresponding to the first area. In the first positioning information correction process, the first apparatus can specifically correct the first positioning information based on the building topology information, to obtain the second positioning information, where the coordinate point corresponding to the second positioning information is located outside an area in which the at least one building is located. That is, based on the building topology information in the map topology information, the first apparatus corrects the positioning information from a building dimension.

In a possible implementation of the second aspect, the at least one building includes a plurality of buildings, and the building topology information includes a connection relationship between the plurality of buildings.

Based on the foregoing technical solution, the building topology information in the map topology information sent by the second apparatus includes the connection relationship between the plurality of buildings corresponding to the first area. Because an error may exist in the first positioning information that corresponds to the location of the first apparatus and that is determined by the first apparatus, coordinates corresponding to the first positioning information may step-change and be positioned to an inside of the building. However, in the technical solution, the building topology information includes the connection relationship between the plurality of buildings corresponding to the first area, so that the first apparatus can correct a step-changed coordinate point based on the connection relationship between the plurality of buildings.

In a possible implementation of the second aspect, the first information includes coordinate information corresponding to the first area, or the first information includes identification information of the first area, or the first information includes index information of the first area.

Optionally, the first area is a rectangular area, a circular area, an oval area, or another regularly-shaped area.

Optionally, the first area is an irregularly-shaped area.

Based on the foregoing technical solution, the first apparatus determines the first positioning information corresponding to the location of the first apparatus, where the coordinate range of the first positioning information is in the first area. Then, the second apparatus can determine the first area in the foregoing plurality of manners. This improves flexibility of solution implementation.

A third aspect of embodiments of this application provides a positioning information processing apparatus. The apparatus can implement the method in any one of the first aspect or the possible implementations of the first aspect. The apparatus includes a corresponding unit or module configured to perform the method. The unit or module included in the apparatus can be implemented by software and/or hardware. For example, the apparatus may be a first apparatus, the apparatus may be a component (for example, a processor, a chip, or a chip system) in a first apparatus, or the apparatus may be a logical module or software that can implement all or some functions of a first apparatus. The apparatus includes a processing unit and a transceiver unit.

The processing unit is configured to determine first positioning information corresponding to a location of the first apparatus, where a coordinate range of the first positioning information is in a first area.

The transceiver unit is configured to send first information to a second apparatus, where the first information indicates the first area.

The transceiver unit is configured to receive map topology information of the first area from the second apparatus.

The processing unit is configured to correct the first positioning information based on the map topology information, to obtain second positioning information.

Based on the foregoing technical solution, in a positioning information correction process of the first apparatus, the transceiver unit sends the first information to the second apparatus to indicate the coordinate range of the first positioning information corresponding to the location of the first apparatus, so that the second apparatus determines the map topology information of the first area based on the first information, and sends the map topology information of the first area to the first apparatus. Then, the processing unit corrects, based on the map topology information, first positioning information corresponding to a positioning location of the first apparatus, to obtain the second positioning information. Compared with a solution in which the first apparatus sends coordinate point information, corresponding to the positioning location, in the positioning information to the second apparatus, to implement a positioning information correction process, in this solution, the processing unit can perform the positioning information correction process based on the map topology information sent by the second apparatus, without a need to transmit coordinate point information of the location of the first apparatus. This avoids a risk of privacy information leakage and improves user experience.

In a possible implementation of the third aspect, the map topology information includes road topology information of at least one road corresponding to the first area.

That the processing unit is configured to correct the first positioning information based on the map topology information, to obtain second positioning information includes:
the processing unit is configured to determine target road topology information from the road topology information, where the target road topology information is road topology information of a road on which the location of the first apparatus is located; and
the processing unit is configured to correct the first positioning information based on the target road topology information, to obtain the second positioning information.

In a possible implementation of the third aspect, the target road topology information includes road width information of the road on which the location of the first apparatus is located.

That the processing unit is configured to correct the first positioning information based on the target road topology information, to obtain the second positioning information includes:
the processing unit is configured to correct the first positioning information based on the road width information in the first positioning information, to obtain the second positioning information, where a coordinate point corresponding to the second positioning information is located inside an area of the target road topology information.

In a possible implementation of the third aspect, that the processing unit is configured to correct the first positioning information based on the road width information in the first positioning information, to obtain the second positioning information includes:
the processing unit is configured to correct the first positioning information based on movement orientation corresponding to the location of the first apparatus and the road width information, to obtain the second positioning information.

In a possible implementation of the third aspect, the at least one road includes a plurality of roads, and the road topology information includes a connection relationship between the plurality of roads. That the processing unit is configured to determine target road topology information from the road topology information includes:
the processing unit is configured to determine the target road topology information from the road topology information based on the connection relationship between the plurality of roads.

In a possible implementation of the third aspect, the map topology information further includes building topology information of at least one building corresponding to the first area. That the processing unit is configured to correct the first positioning information based on the target road topology information, to obtain the second positioning information includes:
the processing unit is configured to correct the first positioning information based on the target road topology information, to obtain third positioning information; and
the processing unit is configured to correct the third positioning information based on the building topology information, to obtain the second positioning information, where a coordinate point corresponding to the second positioning information is located outside an area in which the at least one building is located.

In a possible implementation of the third aspect, the at least one road includes a first road, where the first road is located inside the first area.

In a possible implementation of the third aspect,
the at least one road further includes a second road, where the second road is located outside the first area and the second road intersects a first road; or
the at least one road further includes a third road, where the third road is located outside the first area and the third road intersects a second road.

In a possible implementation of the third aspect, the map topology information includes building topology information of at least one building corresponding to the first area. That the processing unit is configured to correct the first positioning information based on the map topology information, to obtain second positioning information includes:
the processing unit is configured to correct the first positioning information based on the building topology information, to obtain the second positioning information, where a coordinate point corresponding to the second positioning information is located outside an area in which the at least one building is located.

In a possible implementation of the third aspect, the at least one building includes a plurality of buildings, and the building topology information includes a connection relationship between the plurality of buildings.

In a possible implementation of the third aspect, the first information includes coordinate information corresponding to the first area, or the first information includes identification information of the first area, or the first information includes index information of the first area.

In the third aspect of this embodiment of this application, composition modules of the apparatus may be further configured to perform the steps performed in the possible implementations of the first aspect. For details, refer to the first aspect. Details are not described herein again.

A fourth aspect of embodiments of this application provides a positioning information processing apparatus. The apparatus can implement the method in any one of the first aspect or the possible implementations of the first aspect. The apparatus includes a corresponding unit or module configured to perform the method. The unit or module included in the apparatus can be implemented by software and/or hardware. For example, the apparatus may be a second apparatus, the apparatus may be a component (for example, a processor, a chip, or a chip system) in a second apparatus, or the apparatus may be a logical module or software that can implement all or some functions of a second apparatus. The apparatus includes a processing unit and a transceiver unit.

The transceiver unit is configured to receive first information from a first apparatus, where the first information indicates a first area.

The processing unit is configured to determine map topology information of the first area based on the first information.

The transceiver unit is configured to send the map topology information to the first apparatus.

Based on the foregoing technical solution, in a positioning information correction process of the first apparatus, after the transceiver unit receives the first information sent by the first apparatus to indicate a coordinate range of first positioning information corresponding to a location of the first apparatus, the processing unit determines the map topology information of the first area based on the first information, and the transceiver unit sends the map topology information of the first area to the first apparatus, so that the first apparatus corrects, based on the map topology information, first positioning information corresponding to a positioning location of the first apparatus, to obtain second positioning information. Compared with a solution in which the first apparatus sends coordinate point information, corresponding to the positioning location, in the positioning information to the second apparatus, to implement the positioning information correction process, in this solution, the first apparatus can perform the positioning information correction process based on the map topology information sent by the second apparatus, without a need to transmit coordinate point information of the location of the first apparatus. This avoids a risk of privacy information leakage and improves user experience.

In a possible implementation of the fourth aspect, that the processing unit is configured to determine map topology information of the first area based on the first information includes:
the processing unit is configured to obtain geographic information system GIS map information corresponding to the first area, where the GIS map information includes coordinate point information corresponding to the first area; and
the processing unit is configured to determine the map topology information based on the GIS map information.

In a possible implementation of the fourth aspect, the map topology information includes road topology information of at least one road corresponding to the first area.

Optionally, the road topology information includes coordinate point information of the at least one road.

In a possible implementation of the fourth aspect, the road topology information further includes at least one of the following:
road width information of the at least one road; or
a connection relationship between a plurality of roads in the at least one road.

In a possible implementation of the fourth aspect, the at least one road includes a first road, where the first road is located inside the first area.

In a possible implementation of the fourth aspect,
the at least one road further includes a second road, where the second road is located outside the first area and the second road intersects a first road; or
the at least one road further includes a third road, where the third road is located outside the first area and the third road intersects a second road.

In a possible implementation of the fourth aspect, the map topology information includes building topology information of at least one building corresponding to the first area.

Optionally, the building topology information includes coordinate point information of the at least one building.

In a possible implementation of the fourth aspect, the at least one building includes a plurality of buildings, and the building topology information includes a connection relationship between the plurality of buildings.

In a possible implementation of the fourth aspect, the first information includes coordinate information corresponding to the first area, or the first information includes identification information of the first area, or the first information includes index information of the first area.

In the fourth aspect of this embodiment of this application, composition modules of the apparatus may be further configured to perform the steps performed in the possible implementations of the second aspect. For details, refer to the second aspect. Details are not described herein again.

A fifth aspect of the embodiments of this application provides a positioning information processing apparatus (for example, the positioning information processing apparatus is a first apparatus), including at least one processor. The at least one processor is coupled to a memory. The memory is configured to store a program or instructions. The at least one processor is configured to execute the program or the instructions, to enable the apparatus to implement the method in any one of the first aspect or the possible implementations of the first aspect.

A sixth aspect of embodiments of this application provides a positioning information processing apparatus (for example, the positioning information processing apparatus is a second apparatus), including at least one processor. The at least one processor is coupled to a memory. The memory is configured to store a program or instructions. The at least one processor is configured to execute the program or the instructions, to enable the apparatus to implement the method in any one of the second aspect or the possible implementations of the second aspect.

A seventh aspect of embodiments of this application provides a computer-readable storage medium. The readable storage medium stores instructions. When the instructions are executed, a computer is enabled to perform the method in any one of the first aspect or the possible implementations of the first aspect, or a computer is enabled to perform the method in any one of the second aspect or the possible implementations of the second aspect.

An eighth aspect of embodiments of this application provides a computer program product (or referred to as a computer program). The computer program product includes computer program code. When the computer program code is run on a computer, the computer is enabled to perform the method in any one of the first aspect or the possible implementations of the first aspect. Alternatively, when the computer program code is run on a computer, the computer is enabled to perform the method in any one of the second aspect or the possible implementations of the second aspect.

A ninth aspect of embodiments of this application provides a chip system. The chip system includes at least one processor, configured to implement functions in any one of the first aspect or the possible implementations of the first aspect. Alternatively, the chip system includes at least one processor, configured to implement functions in any one of the second aspect or the possible implementations of the second aspect.

In a possible design, the chip system may further include a memory, and the memory is configured to store instructions and/or data. The chip system may include a chip, or may include a chip and another discrete component. Optionally, the chip system further includes an interface circuit, and the interface circuit is configured to input or output instructions and/or data.

A tenth aspect of embodiments of this application provides a communication system. The communication system includes the apparatuses in the third aspect and the fourth aspect, or the communication system includes the apparatuses in the fifth aspect and the sixth aspect.

For technical effects brought by any possible implementation of the second aspect to the tenth aspect, refer to technical effects brought by the first aspect and different implementations of the first aspect. Details are not described herein again.

It should be understood that "sending" in this application may also be referred to as "outputting", and "receiving" may also be referred to as "inputting".

It can be learned from the foregoing technical solution that, in the positioning information correction process of the first apparatus, the first apparatus sends the first information to the second apparatus to indicate the coordinate range of the first positioning information corresponding to the location of the first apparatus, so that the second apparatus determines the map topology information of the first area based on the first information, and sends the map topology information of the first area to the first apparatus. Then, the first apparatus corrects, based on the map topology information, the first positioning information corresponding to the positioning location of the first apparatus, to obtain the second positioning information. Compared with a solution in which the first apparatus sends coordinate point information, corresponding to the positioning location, in the positioning information to the second apparatus, to implement the positioning information correction process, in this solution, the first apparatus can perform the positioning information correction process based on the map topology information sent by the second apparatus, without a need to transmit the coordinate point information of the location of the first apparatus. This avoids the risk of privacy information leakage and improves user experience.

### BRIEF DESCRIPTION OF DRAWINGS

FIG. 1 is a schematic diagram of a network architecture of a positioning correction process according to this application;
FIG. 2 is a schematic diagram of another network architecture of a positioning correction process according to this application;
FIG. 3 is a schematic interaction diagram of a positioning information processing method according to this application;
FIG. 4 is a schematic diagram of an implementation example of road topology information according to this application;
FIG. 5a is another schematic diagram of an implementation example of road topology information according to this application;
FIG. 5b is another schematic diagram of an implementation example of road topology information according to this application;
FIG. 6 is another schematic diagram of an implementation example of road topology information according to this application;
FIG. 7 is a schematic diagram of an implementation example of road topology information and building topology information according to this application;
FIG. 8 is a schematic diagram of an implementation example of building topology information according to this application;
FIG. 9 is a schematic diagram of a positioning information processing apparatus according to this application;
FIG. 10 is another schematic diagram of a positioning information processing apparatus according to this application; and
FIG. 11 is a schematic diagram of a communication apparatus according to this application.

### DESCRIPTION OF EMBODIMENTS

In this application, unless otherwise specified, for identical or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following descriptions are implementations of this application, but are not intended to limit the protection scope of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, the apparatus provided in embodiments of this application may also correspondingly implement these features or functions. Details are not described herein.

In the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not constitute a limitation on a quantity or an execution sequence, and that the terms such as "first" and " second" do not indicate a definite difference. In addition, in embodiments of this application, the term "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" are intended to present a related concept in a specific manner for ease of understanding.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute a limitation on the technical solutions provided in embodiments of this application.

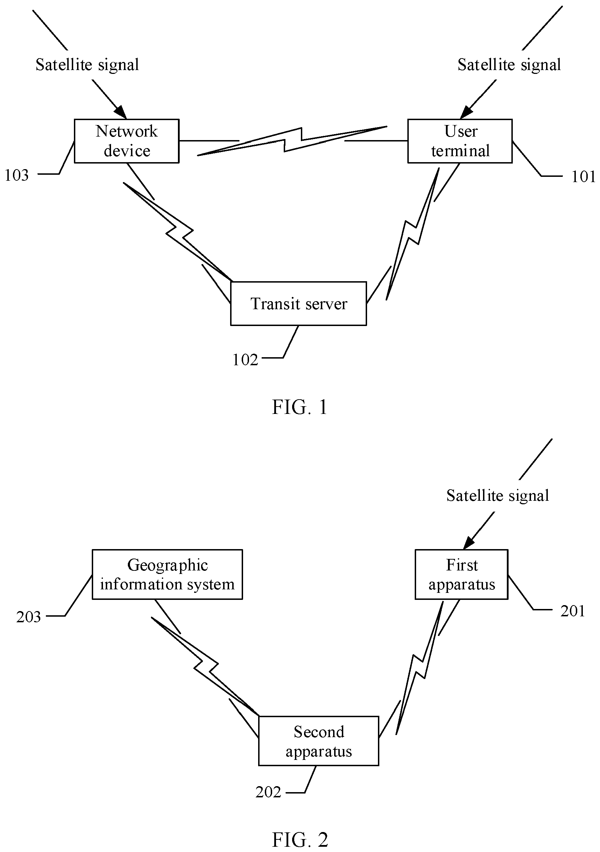

FIG. 1 is a schematic diagram of a network architecture of a positioning correction process according to this application. The architecture includes a user terminal 101, a transit server 102, and a network device 103. The user terminal 101, the transit server 102, and the network device 103 may communicate with each other through a wired connection (or a wireless connection), to implement information exchange. The network architecture shown in FIG. 1 may be applied to a GNSS.

The GNSS generally includes three parts: a space constellation (namely, a device configured to send a satellite signal, for example, a satellite), a ground monitor (for example, the transit server 102 shown in FIG. 1), and a positioning device (for example, the user terminal 101 or the network device 103 shown in FIG. 1). Generally, the positioning device includes a signal receiver, and the signal receiver is configured to: receive a satellite signal, obtain data such as location coordinates (longitude and latitude information), time, and a movement speed, and complete a real-time positioning service.

With increasing improvement of the GNSS, an engineering service, and a business service, there are rapidly growing demands for a high-precision positioning technology in various fields. For example, a global positioning system (global positioning system, GPS) is used on a smartphone, multimedia, and a mobile computer. Development of 5G, artificial intelligence, and wearable devices greatly expands application of the high-precision positioning technology, to achieve integrated indoor and outdoor positioning and navigation, including assurance of remote medical monitoring, a smart mobility service, a smart tourism service, personal safety, emergency rescue, and the like. However, various errors may occur in an actual positioning process. Therefore, a positioning correction technology usually needs to be used for a precise positioning service. During practical application, due to impact of factors such as observation time, an atmospheric environment, and a geographical environment (for example, a sampling error) of the positioning device,
different positioning correction technologies are developed based on different positioning modes. The following describes a plurality of positioning correction technologies by using a GPS positioning system that provides a wide range of services as an example.

Implementation 1: Positioning is performed by using an independent GPS receiver.

In the implementation 1, the user terminal 101 shown in FIG. 1 can receive a satellite signal from only the GPS and calculate a positioning location of the user terminal 101 based on the satellite signal, independent of additional information of any other resource. In this case, precise positioning can rely on only repeated and long-term measurements of a single measurement point, to reduce errors caused by a sampling frequency and the like.

Implementation 2: Positioning correction based on a reference station.

In the implementation 2, after being positioned by using an independent GPS receiver, the user terminal 101 shown in FIG. 1 corrects a GPS error based on information released by a nearby reference station, and then adds a real-time error value to a coordinate operation of the user terminal 101, so as to obtain a more precise value. The technology is developed into a differential global positioning system (differential global positioning system, DGPS).

The DGPS is a positioning correction technology applied in a GPS system to improve positioning precision. Aprinciple of the DGPS is to configure a GPS receiver on the network device 103 as a reference station, so that the GPS receiver and the user terminal 101 simultaneously perform GPS observation. The network device 103 compares an obtained single-point positioning result (of a user) with coordinates of the network device 103 to solve a real-time differential correction value, and transmits the differential correction value to the user terminal 101 near the network device 103 through a broadcast or a data link, so as to correct GPS positioning information of the user terminal 101 and improve positioning precision of the user in a local range.

However, in the implementation 2, the network device 103 needs to be additionally equipped with a GPS receiver as a reference station (for example, the network device 103 is a conventional surveying and mapping device), and a distance between the user terminal 101 and the network device 103 affects accuracy of a correction result. For example, a longer distance between the user terminal 101 and the network device 103 causes a less accurate positioning correction result. Particularly, the situation may deteriorate when the user terminal 101 and the network device 103 do not have a satellite signal sent by a same satellite as a reference.

Implementation 3: Positioning correction by using a map matching technology.

In the implementation 3, the map matching technology is mainly used to perform positioning correction on a vehicle traveling route collected by a GPS. The map matching technology generally intends to compare and match a measurement point with map data according to an embedded auxiliary positioning algorithm, to find a road on which a vehicle is located, calculate a location of the vehicle on the road, and further correct a positioning error. Generally, there are a network side positioning method and a mobile client positioning method. The difference lies in that the auxiliary positioning algorithm is embedded in a network service center or a local user terminal.

When the auxiliary positioning algorithm is embedded in the local user terminal for execution, because map information with a large quantity of data and a complex data structure needs to be pre-stored in the local user terminal, the implementation process has a high requirement on a hardware device of the local user terminal.

When the auxiliary positioning algorithm is embedded in the network service center (for example, the transit server 102 shown in FIG. 1) for execution, it is difficult to achieve a degree of practicality due to high time complexity, a slow matching speed, and low efficiency of the algorithm. In addition, after the positioning device collects the positioning information, the positioning device may send the positioning information to the network service center. Thereafter, the network service center corrects the positioning information based on the stored map information to calibrate an error, and sends corrected positioning information to the positioning device.

However, in the foregoing implementation, because a positioning information correction process is performed in the network service center, the positioning device needs to transmit coordinate point information, corresponding to a positioning location, in the positioning information to the network service center. The transmission process may cause a risk of privacy information leakage, which affects user experience.

To resolve the foregoing technical problem, this application provides a positioning information processing method and apparatus, to correct the positioning information. Compared with a solution in which a first apparatus sends the coordinate point information, corresponding to the positioning location, in the positioning information to a second apparatus, to implement the positioning information correction process, in this solution, the first apparatus can perform the positioning information correction process based on map topology information sent by the second apparatus, without a need to transmit coordinate point information of a location of the first apparatus. This avoids the risk of privacy information leakage and improves user experience.

The following describes a schematic diagram of a network architecture provided in this application.

FIG. 2 is a schematic diagram of another network architecture of a positioning correction process according to this application. As shown in FIG. 2, the network architecture provided in this application includes a first apparatus 201 configured to receive a satellite signal and a second apparatus 202 having a communication connection to the first apparatus 201.

Optionally, the network architecture further includes a geographic information system (or referred to as a server, a vendor, or the like that provides GIS data) 203 having a communication connection to the second apparatus 202.

In some designs, the first apparatus may be specifically a vehicle-mounted terminal embedded in (or disposed outside) a vehicle, a mobile phone, a user terminal, a user apparatus, an access apparatus, a subscriber station, a subscriber unit, a mobile station, a user agent, or user equipment. The user terminal may include various devices having a wireless communication function, for example, a handheld device, a vehicle-mounted device, a wearable device, an Internet of things (Internet of things, loT) device, a computing device, another processing device connected to a wireless modem, user equipment (user equipment, UE) in various forms, a mobile station (mobile station, MS), a terminal (terminal), a terminal device (terminal equipment), a portable communication device, a handheld device, a portable computing device, an entertainment device, a game device or a system. Alternatively, the first apparatus may be a wearable device, an uncrewed aerial vehicle, a robot, a terminal in device-to-device (device-to-device, D2D) communication, a terminal in vehicle to everything (vehicle to everything, V2X), a terminal device in virtual reality (virtual reality, VR), a terminal device in augmented reality (augmented reality, AR), a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In some designs, the second apparatus may be a communication device, for example, a base station, a router, a gateway, a repeater, a vehicle-mounted server, a vehicle-mounted terminal, a surveying and mapping device (for example, a surveying and mapping vehicle), a mobile base station, a network service center, a communication server, a switch, or a bridge. The base station may include various forms of macro base stations, micro base stations, relay stations, and the like. Alternatively, the second apparatus may be an evolved NodeB (evolved NodeB, eNB or eNodeB) in LTE, a base station in a 5G network or a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a 5G base station, a device for implementing a function of a base station in the future, a transmitting and receiving point (transmitting and receiving point, TRP), a transmitting point (transmitting point, TP), a mobile switching center, and a device having a function of a base station in device-to-device (Device-to-Device, D2D), vehicle-to-everything (vehicle-to-everything, V2X), or machine-to-machine (machine-to-machine, M2M) communication.

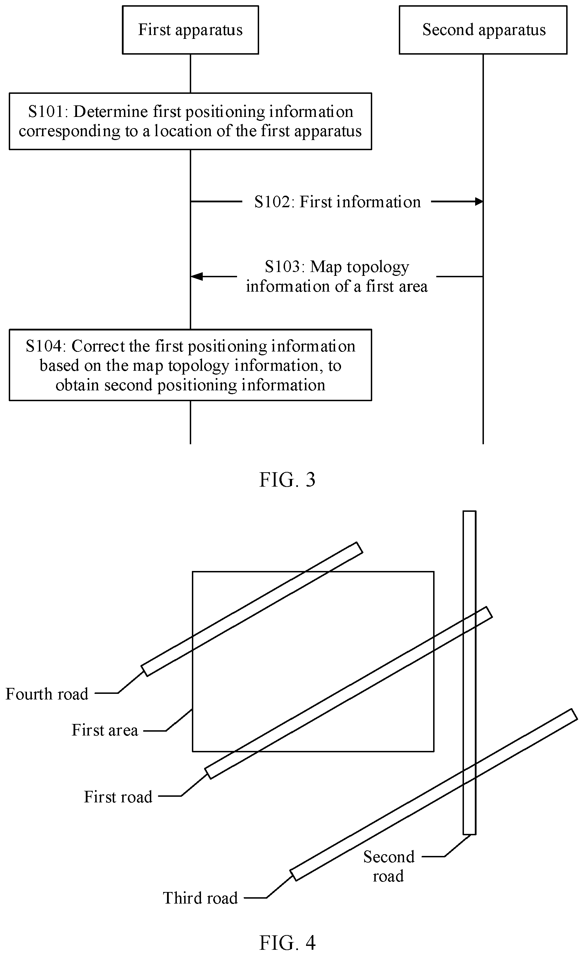

FIG. 3 is a schematic diagram of a positioning information processing method according to this application. The method includes the following steps.

S 101: A first apparatus determines first positioning information corresponding to a location of the first apparatus.

In this embodiment, the first apparatus determines the first positioning information corresponding to the location of the first apparatus in step S101, where a coordinate range of the first positioning information is in a first area.

Optionally, the first positioning information may be positioning point coordinate information collected by the first apparatus by using a positioning module of the first apparatus, or the first positioning information may be obtained by correcting initial positioning information by using the foregoing DGPS or in another correction manner, where the initial positioning information is positioning point coordinate information collected by the first apparatus by using a positioning module of the first apparatus. This is not limited herein.

S102: The first apparatus sends first information.

In this embodiment, the first apparatus sends the first information to the second apparatus in step S102, and correspondingly, the second apparatus receives the first information in step S 102. The first information indicates the first area.

In a possible implementation, the first information sent by the first apparatus in step S 102 includes coordinate information (for example, longitude and latitude coordinate information, and coordinate information of a three-dimensional coordinate system) corresponding to the first area. Alternatively, the first information includes identification information (for example, a city code of the first area) of the first area. Alternatively, the first information includes index information of the first area (for example, a mapping relationship between the index information and an area indicated by the index information is pre-stored in both the first apparatus and the second apparatus).

Optionally, the first area is a rectangular area, a circular area, an oval area, or another regularly-shaped area. For example, the first information includes the coordinate information corresponding to the first area. If the first area is a rectangular area, the first information may include coordinate information of four vertices of the rectangular area. If the first area is a circular area (a value of a radius/a diameter of the circular area may be pre-stored in the first apparatus and the second apparatus), the first information may include coordinate information of the center of a circle of the rectangular area.

Optionally, the first area is an irregularly-shaped area (for example, a street, a community, or a village).

Specifically, the first apparatus determines the first positioning information corresponding to the location of the first apparatus in step S101, where the coordinate range of the first positioning information is in the first area. Then, the first apparatus may indicate the first area to the second apparatus based on the first information in the foregoing plurality of manners in step S 102.

S103: The second apparatus sends map topology information of the first area.

In this embodiment, after receiving the first information in step S102, the second apparatus may determine the map topology information of the first area based on the first information. In addition, the second apparatus sends the map topology information of the first area to the first apparatus in step S103, and correspondingly, the first apparatus receives the map topology information of the first area in step S 103.

In a possible implementation, after receiving the first information in step S102, the second apparatus may determine the map topology information of the first area based on the first information. The process may specifically include: The second apparatus obtains GIS map information corresponding to the first information, where the GIS map information includes coordinate point information corresponding to the first area; and the second apparatus determines the map topology information based on the GIS map information.

In a possible implementation, in a process of determining the map topology information of the first area, the second apparatus may obtain the GIS map information based on the first information, and construct the map topology information based on the coordinate point information corresponding to the first area in the GIS map information. Compared with the GIS map information that includes the coordinate point information, the map topology information includes a connection relationship between the coordinate point information in addition to the coordinate point information, so as to indicate, to the first apparatus based on the map topology information, topology information of at least one road and/or at least one building corresponding to the first area.

Optionally, that the second apparatus determines the map topology information of the first area based on the first information includes: The second apparatus determines the map topology information of the first area in a prestored database based on the first information.

S104: The first apparatus corrects the first positioning information based on the map topology information, to obtain second positioning information.

In this embodiment, the first apparatus corrects the first positioning information based on the map topology information received in step S103, to obtain the second positioning information.

Specifically, the map topology information indicates map-related information corresponding to the first area, and the map topology information may specifically include related information of at least one of a road corresponding to the first area or a building corresponding to the first area. The following provides descriptions with reference to a plurality of implementations.

Implementation 1: The map topology information includes at least road topology information of the at least one road corresponding to the first area.

In the implementation 1, the map topology information sent by the second apparatus in step S103 includes the road topology information of the at least one road corresponding to the first area. A process in which the first apparatus corrects the first positioning information based on the map topology information, to obtain the second positioning information in step S104 specifically includes: The first apparatus determines target road topology information from the road topology information, where the target road topology information is road topology information of a road on which the location of the first apparatus is located. The first apparatus corrects the first positioning information based on the target road topology information, to obtain the second positioning information.

Optionally, the first apparatus is a vehicle-mounted terminal that performs positioning on a road, or the first apparatus is another terminal that performs positioning on a road.

Specifically, the map topology information received by the first apparatus from the second apparatus includes the road topology information of the at least one road corresponding to the first area. In a first positioning information correction process, the first apparatus can specifically determine, based on the map topology information, the target road topology information of the road on which the location of the first apparatus is located, and further correct the first positioning information based on the target road topology information, to obtain the second positioning information. That is, based on the road topology information in the map topology information, the first apparatus corrects the positioning information from a road dimension.

Optionally, the at least one road includes a first road, where the first road is located inside the first area. Specifically, the at least one road corresponding to the first area may include at least the first road located inside the first area, so that the first apparatus performs a positioning information correction process based on road topology information of a road inside the first area.

In addition, the at least one road further includes a second road, where the second road is located outside the first area and the second road intersects a first road; or the at least one road further includes a third road, where the third road is located outside the first area and the third road intersects a second road. Specifically, in addition to the first road located inside the first area, the at least one road corresponding to the first area may include another road associated with the first road. Because an error may exist in the first positioning information that corresponds to the location of the first apparatus and that is determined by the first apparatus, actual coordinates corresponding to the first positioning information may be located on a road outside the first area. In the foregoing technical solution, in addition to the first road inside the first area, a road indicated by the road topology information included in the map topology information received by the first apparatus further includes another road related to the first road, to improve correction precision of the positioning information.

For example, as shown in FIG. 4, an example in which a shape of the first area is a rectangle is used. A part or all of the first road (and possibly a fourth road) is located inside the first area, and the map topology information sent by the second apparatus to the first apparatus in step S103 includes at least road topology information of the first road (and possibly the fourth road).

Optionally, as shown in FIG. 4, the second road is not a road located inside the first area, but the first road intersects the second road (denoted as a first-intersection road). To provide more complete road information for the first apparatus, the map topology information sent by the second apparatus to the first apparatus in step S103 includes road topology information of the second road in addition to road topology information of the first road (and possibly a fourth road).

Optionally, as shown in FIG. 4, the third road is not a road located inside the first area, and the third road does not intersect the first road (and possibly a fourth road), but the second road intersects the third road (denoted as a second-intersection road). To provide more complete road information for the first apparatus, the map topology information sent by the second apparatus to the first apparatus in step S103 includes road topology information of the second road and road topology information of the third road in addition to road topology information of the first road (and possibly the fourth road).

To sum up, in some possible designs, to provide the more complete road information for the first apparatus, the map topology information sent by the second apparatus to the first apparatus in step S103 includes road topology information of a first-intersection road, a second-intersection road, or an N^{th}-intersection road in addition to the road topology information of the first road (and possibly the fourth road), so that the first apparatus implements more precise positioning correction based on the more complete road information in step S104.

Further, the target road topology information included in the map topology information sent by the second apparatus in step S103 includes road width information of the road on which the location of the first apparatus is located. A process in which the first apparatus corrects the first positioning information based on the target road topology information, to obtain the second positioning information in step S104 specifically includes: The first apparatus corrects the first positioning information based on the road width information in the first positioning information, to obtain the second positioning information, where a coordinate point corresponding to the second positioning information is located inside an area of the target road topology information.

Specifically, the target road topology information in the map topology information received by the first apparatus from the second apparatus includes the road width information of the road on which the location of the first apparatus is located. Because an error may exist in the first positioning information that corresponds to the location of the first apparatus and that is determined by the first apparatus, coordinates corresponding to the first positioning information may step-change on a road (for example, step-change on a plurality of roads, or step-change to a location outside the road). In the positioning information correction process, the first apparatus corrects, based on the road width information, a coordinate point that corresponds to the first positioning information and that is located outside the area of the target road topology information, so that a coordinate point that corresponds to the second positioning information and that is obtained through correction is included in the area of the target road topology information. In other words, the positioning information correction process performed by the first apparatus may include: The first apparatus corrects, based on the road width information in the target road topology information, a coordinate point that deviates from an area in which the road is located, to obtain the coordinate point in the area in which the road is located.

Optionally, a process in which the first apparatus corrects the first positioning information based on the road width information in the first positioning information, to obtain the second positioning information in step S104 specifically includes: The first apparatus corrects the first positioning information based on movement orientation corresponding to the location of the first apparatus and the road width information, to obtain the second positioning information.

Specifically, in the positioning information correction process performed by the first apparatus, the first apparatus may correct the first positioning information based on the movement orientation of the first apparatus and the road width information, to obtain the second positioning information. Because an error may exist in the first positioning information that corresponds to the location of the first apparatus and that is determined by the first apparatus, the coordinates corresponding to the first positioning information may step-change on (retrograde) lanes of different orientation on the road. To be specific, the first apparatus further determines, based on the movement orientation of the first apparatus and the road width information, a road on which the location of the first apparatus is located in a movement process, and corrects a coordinate point that corresponds to the first positioning information and that is located outside an area in which the road is located, so that a coordinate point corresponding to the second positioning information obtained through correction is located inside the area in which the road is located.

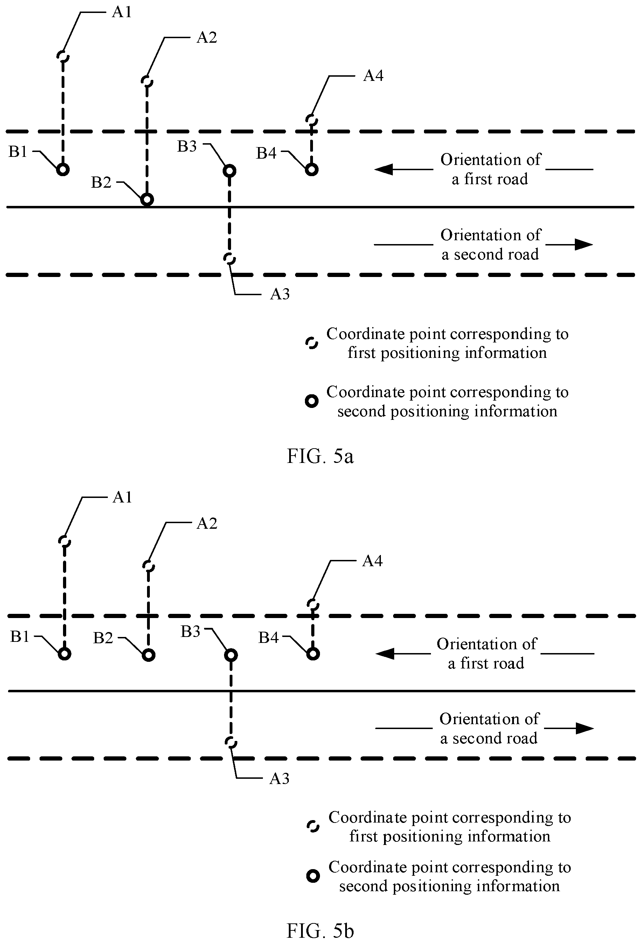

For example, as shown in FIG. 5a, if the first apparatus moves on a road, the first apparatus may determine orientation of the road. In a scenario shown in FIG. 5a, the first apparatus may determine the orientation of the road based on movement judgment of the first apparatus (or based on an operation instruction of the user). For example, it is obtained that the "orientation of the first road" in FIG. 5a is a right-to-left driving direction, and "orientation of the second road" in FIG. 5a is a left-to-right driving direction. In FIG. 5a, coordinate points corresponding to the first positioning information may include coordinate points such as "A1", "A2", "A3", and "A4" in the figure. In the first positioning information correction process in step S104, the first apparatus may correct the first positioning information based on the road width information in the road topology information and the movement orientation corresponding to the location of the first apparatus, to obtain the second positioning information. The second positioning information includes coordinate points such as "B 1", "B2", "B3", and "B4" in FIG. 5a. It can be learned from FIG. 5a that the first apparatus can correct a related coordinate point when correcting the first positioning information in step S104, to reduce an error.

Optionally, a process in which the first apparatus corrects the first positioning information based on the target road topology information, to obtain the second positioning information in step S104 specifically includes: The first apparatus corrects the first positioning information based on the road width information in the first positioning information, to obtain the second positioning information.

Optionally, a curve on which the coordinate point corresponding to the second positioning information is located is a first curve, and a curvature of the first curve is less than a first threshold.

Specifically, because an error may exist in the first positioning information that corresponds to the location of the first apparatus and that is determined by the first apparatus, the coordinates corresponding to the first positioning information may step-change inside a road. Therefore, in the positioning information correction process, the first apparatus corrects, based on the target road topology information, a coordinate point whose curvature is greater than the first threshold and that is located on an initial curve including a coordinate point corresponding to the first positioning information, so that a curve on which a coordinate point corresponding to the second positioning information obtained through correction is located is the first curve, and a curvature of the first curve is less than the first threshold. In other words, the positioning information correction process performed by the first apparatus may include: The first apparatus corrects, based on the target road topology information, a coordinate point that may step-change inside the road.

Optionally, a value of the first threshold may be a maximum value (or another value, which is merely an example for description herein) of a plurality of average speeds: max(v1, ..., vi, ..., vn), where n is an integer greater than i, and a value of i is an integer greater than or equal to 1 and less than n. Specifically, a plurality of time intervals obtained through data sampling may be represented as (Δt1, ..., Δti, ..., Δtn), a path length corresponding to each time interval may be represented as (L1, ..., Li, ..., Ln), and an average speed corresponding to each time interval may be represented as vi=(Li/Δti). Therefore, the first threshold may be obtained by solving the average speed.

For example, as shown in FIG. 5a, if a curve corresponding to the coordinate points such as "B1", "B2", "B3", and "B4" is denoted as the initial curve, a curvature, on the coordinate point "B2", of the initial curve is large. In FIG. 5a, an implementation example shown in FIG. 5b may be obtained by correcting the coordinate point "B2". After correction, a curve corresponding to coordinate points such as "B 1", "B2", "B3", and "B4" in FIG. 5b is denoted as the first curve. A curvature, on the coordinate point "B2", of the first curve is less than the curvature, on the coordinate point "B2", of the initial curve. This avoids a step change of a coordinate point, so that a smooth curve change corresponding to the first curve is closer to an actual movement of the first apparatus. This further improves user experience.

Further, the at least one road corresponding to the road topology information in the map topology information sent by the second apparatus in step S103 includes a plurality of roads, and the road topology information includes a connection relationship between the plurality of roads. A process in which the first apparatus determines the target road topology information from the road topology information specifically includes: The first apparatus determines the target road topology information from the road topology information based on the connection relationship between the plurality of roads.

Specifically, the road topology information in the map topology information received by the first apparatus from the second apparatus includes the connection relationship between the plurality of roads corresponding to the first area. Because an error may exist in the first positioning information that corresponds to the location of the first apparatus and that is determined by the first apparatus, the coordinates corresponding to the first positioning information may step-change on the plurality of roads. Therefore, the first apparatus determines, based on the connection relationship between the plurality of roads, the road on which the location of the first apparatus is located, and determines the target road topology information corresponding to the road.

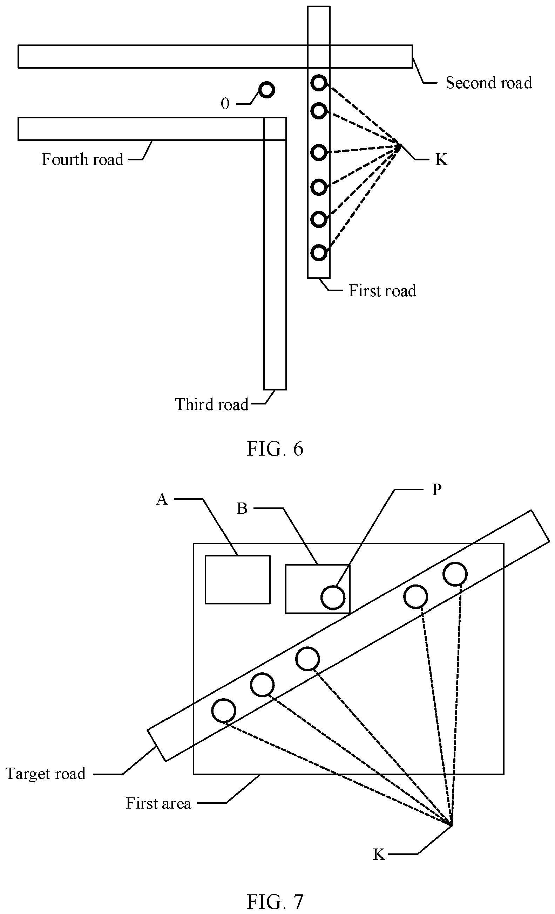

For example, as shown in FIG. 6, after receiving the map topology information in step S103, the first apparatus may determine, based on the road topology information in the map topology information, that the first area includes four roads, which are respectively a first road, a second road, a third road, and a fourth road in FIG. 6. Based on a connection relationship between the plurality of roads, the first apparatus may determine that the first road is connected to the second road (or referred to as intersecting), and the third road is connected to the fourth road. The coordinate point corresponding to the first positioning information includes six locations indicated by "K" and one location indicated by "0" in FIG. 6. In this way, in step S104, the first apparatus may determine that there is a high probability that a location indicated by the coordinate point "0" does not step-change to another road that does not intersect the first road. In other words, in step S104, the first apparatus may correct the coordinate point "0" included in the first positioning information to the first road or the second road, and avoid correcting the coordinate point "0" to the third road or the fourth road close to the coordinate point "0". In this way, a coordinate change of a coordinate point included in the second positioning information that is obtained by the first apparatus by correcting the first positioning information in step S104 is closer to an actual road condition. This further improves user experience.

In a possible implementation, in the implementation 1, the map topology information sent by the second apparatus in step S103 further includes the building topology information of the at least one building corresponding to the first area. A process in which the first apparatus corrects the first positioning information based on the target road topology information, to obtain the second positioning information in step S104 specifically includes: The first apparatus corrects the first positioning information based on the target road topology information, to obtain third positioning information. The first apparatus corrects the third positioning information based on the building topology information, to obtain the second positioning information, where the coordinate point corresponding to the second positioning information is located outside an area in which the at least one building is located.

Optionally, the first apparatus is a vehicle-mounted terminal that performs positioning on a road, or the first apparatus is another terminal that performs positioning on a road, or the first apparatus is a terminal that performs positioning outside a building.

Optionally, a coordinate point corresponding to the third positioning information is located inside the area of the target road topology information.

Specifically, in addition to the road topology information of the at least one road corresponding to the first area, the map topology information received by the first apparatus from the second apparatus includes the building topology information of the at least one building corresponding to the first area. In the first positioning information correction process, the first apparatus can specifically correct the first positioning information based on the map topology information and the target road topology information. After obtaining the third positioning information, the first apparatus corrects the third positioning information based on the building topology information, to obtain the second positioning information, where the coordinate point corresponding to the second positioning information is located outside the area in which the at least one building is located. That is, based on the building topology information in the map topology information, the first apparatus corrects the positioning information from a building dimension.

For example, as shown in FIG. 7, an example in which a shape of the first area is a rectangle is still used herein. The first area includes a road (denoted as a target road) and two buildings (denoted as "A" and "B"). The coordinate point corresponding to the first positioning information includes five locations indicated by "K" and one location indicated by "P" in FIG. 7. Therefore, in step S104, the first apparatus may determine that there is a high probability that the location indicated by the coordinate point "P" does not step-change to an inside of the building "B". In other words, in step S104, the first apparatus may correct the coordinate point "P" included in the first positioning information to the target road. In this way, a coordinate change of a coordinate point included in the second positioning information that is obtained by the first apparatus by correcting the first positioning information in step S104 is closer to an actual road condition. This further improves user experience.

Further, the at least one building includes a plurality of buildings, and the building topology information includes a connection relationship between the plurality of buildings.

Specifically, the building topology information in the map topology information received by the first apparatus from the second apparatus includes the connection relationship between the plurality of buildings corresponding to the first area. Because an error may exist in the first positioning information that corresponds to the location of the first apparatus and that is determined by the first apparatus, coordinates corresponding to the first positioning information may step-change and be positioned to an inside of the building. However, in the technical solution, the building topology information includes the connection relationship between the plurality of buildings corresponding to the first area, so that the first apparatus can correct a step-changed coordinate point based on the connection relationship between the plurality of buildings.

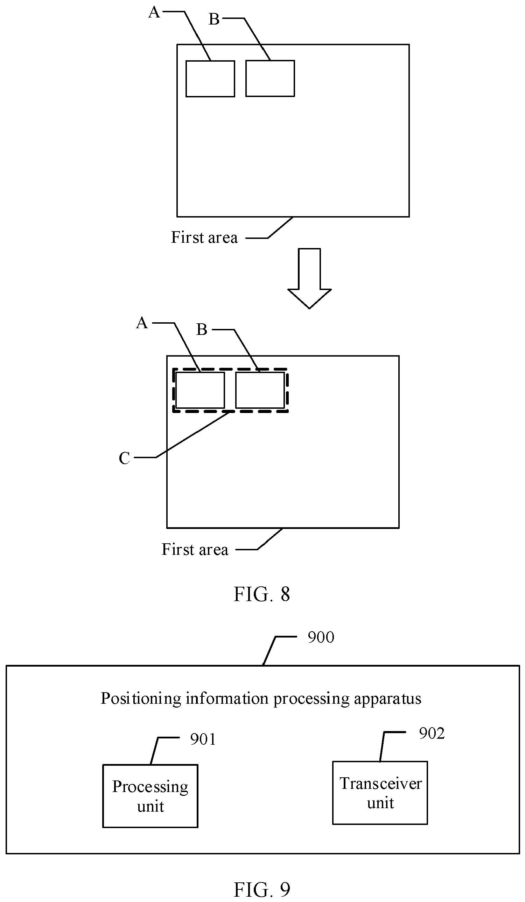

For example, as shown in FIG. 8, an example in which a shape of the first area is a rectangle is still used herein. The first area includes two buildings (denoted as "A" and "B"). When a spacing between the building "A" and the building "B" is less than a specific threshold (for example, two meters or three meters), it may be considered that there is a high probability that a vehicle in which the first apparatus is located does not travel to the middle of the two buildings. In this case, the second apparatus may send the connection relationship between the plurality of buildings to the first apparatus in step S103. For example, in a scenario shown in FIG. 8, the second apparatus sends indication information to the first apparatus in step S103. The indication information is used to indicate that the building "A" and the building "B" are connected to each other; or the indication information is used to indicate that a building "C" includes the building "A" and the building "B"; or the indication information is used to indicate that the building "A" and the building "B" in the building "C" are integrated buildings; or another indication manner is used. This is not limited herein. Therefore, in step S104, the first apparatus can more easily determine, based on the connection relationship between the plurality of buildings, whether the coordinate point corresponding to the first positioning information is located inside the building, and a coordinate point that step-changes to the coordinate point inside the building has been corrected.

Implementation 2: The map topology information includes at least building topology information of the at least one building corresponding to the first area.

In the implementation 2, the map topology information further includes the building topology information of the at least one building corresponding to the first area. That the first apparatus corrects the first positioning information based on the map topology information, to obtain second positioning information includes: The first apparatus corrects the first positioning information based on the building topology information, to obtain the second positioning information, where a coordinate point corresponding to the second positioning information is located outside an area in which the at least one building is located.

Optionally, the first apparatus is a vehicle-mounted terminal that performs positioning on a road, or the first apparatus is another terminal that performs positioning on a road, or the first apparatus is a terminal that performs positioning outside a building.

Specifically, the map topology information received by the first apparatus from the second apparatus includes the building topology information of the at least one building corresponding to the first area. In a first positioning information correction process, the first apparatus can specifically correct the first positioning information based on the building topology information, to obtain the second positioning information, where a coordinate point corresponding to the second positioning information is located outside an area in which the at least one building is located. That is, based on the building topology information in the map topology information, the first apparatus corrects the positioning information from a building dimension.

Further, the at least one building includes a plurality of buildings, and the building topology information includes a connection relationship between the plurality of buildings.

Specifically, the building topology information in the map topology information received by the first apparatus from the second apparatus includes the connection relationship between the plurality of buildings corresponding to the first area. Because an error may exist in the first positioning information that corresponds to the location of the first apparatus and that is determined by the first apparatus, coordinates corresponding to the first positioning information may step-change and be positioned to an inside of the building. However, in the technical solution, the building topology information includes the connection relationship between the plurality of buildings corresponding to the first area, so that the first apparatus can correct a step-changed coordinate point based on the connection relationship between the plurality of buildings.

Specifically, for an implementation of the implementation 2, refer to implementation examples shown in FIG. 7 and FIG. 8 in the foregoing implementation 1. Details are not described herein again.

Based on the technical solutions shown in FIG. 2 to FIG. 8, in the positioning information correction process of the first apparatus, the first apparatus sends the first information to the second apparatus to indicate the coordinate range of the first positioning information corresponding to the location of the first apparatus, so that the second apparatus determines the map topology information of the first area based on the first information, and sends the map topology information of the first area to the first apparatus. Then, the first apparatus corrects, based on the map topology information, first positioning information corresponding to a positioning location of the first apparatus, to obtain the second positioning information. Compared with a solution in which the first apparatus sends coordinate point information, corresponding to the positioning location, in the positioning information to the second apparatus, to implement the positioning information correction process, in this solution, the first apparatus can perform the positioning information correction process based on the map topology information sent by the second apparatus, without a need to transmit the coordinate point information of the location of the first apparatus. This avoids the risk of privacy information leakage and improves user experience.

To implement functions in the method provided in the foregoing embodiments of this application, the first apparatus and the second apparatus may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 9 is a schematic diagram of a positioning information processing apparatus 900 according to an embodiment of this application (for example, the positioning information processing apparatus 900 is the first apparatus or the second apparatus in the foregoing embodiments). The positioning information processing apparatus 900 may be a terminal or a network device, or may be an apparatus in a terminal device or a network device, or may be an apparatus that can be used in a manner of matching a terminal device or a network device. In a possible implementation, the positioning information processing apparatus 900 may include modules or units that are in a one-to-one correspondence with the methods/operations/steps/actions performed by the first apparatus or the second apparatus in the foregoing method embodiments. The unit may be implemented by a hardware circuit, software, or a combination of a hardware circuit and software.

In a possible implementation, the positioning information processing apparatus 900 includes a processing unit 901 and a transceiver unit 902.

In a possible implementation, the positioning information processing apparatus 900 is configured to perform the method in any possible implementation corresponding to the first apparatus.

The processing unit 901 is configured to determine first positioning information corresponding to a location of the first apparatus, where a coordinate range of the first positioning information is in a first area.

The transceiver unit 902 is configured to send first information to a second apparatus, where the first information indicates the first area.

The transceiver unit 902 is configured to receive map topology information of the first area from the second apparatus.

The processing unit 901 is configured to correct the first positioning information based on the map topology information, to obtain second positioning information.

In a possible implementation, the map topology information includes road topology information of at least one road corresponding to the first area.

That the processing unit 901 is configured to correct the first positioning information based on the map topology information, to obtain second positioning information includes:
the processing unit 901 is configured to determine target road topology information from the road topology information, where the target road topology information is road topology information of a road on which the location of the first apparatus is located; and
the processing unit 901 is configured to correct the first positioning information based on the target road topology information, to obtain the second positioning information.

In a possible implementation, the target road topology information includes road width information of the road on which the location of the first apparatus is located.

That the processing unit 901 is configured to correct the first positioning information based on the target road topology information, to obtain the second positioning information includes:
the processing unit 901 is configured to correct the first positioning information based on the road width information in the first positioning information, to obtain the second positioning information, where a coordinate point corresponding to the second positioning information is located inside an area of the target road topology information.

In a possible implementation, that the processing unit 901 is configured to correct the first positioning information based on the road width information in the first positioning information, to obtain the second positioning information includes:
the processing unit 901 is configured to correct the first positioning information based on movement orientation corresponding to the location of the first apparatus and the road width information, to obtain the second positioning information.

In a possible implementation, the at least one road includes a plurality of roads, and the road topology information includes a connection relationship between the plurality of roads. That the processing unit 901 is configured to determine target road topology information from the road topology information includes:
the processing unit 901 is configured to determine the target road topology information from the road topology information based on the connection relationship between the plurality of roads.

In a possible implementation, the map topology information further includes building topology information of at least one building corresponding to the first area. That the processing unit 901 is configured to correct the first positioning information based on the target road topology information, to obtain the second positioning information includes:
the processing unit 901 is configured to correct the first positioning information based on the target road topology information, to obtain third positioning information; and
the processing unit 901 is configured to correct the third positioning information based on the building topology information, to obtain the second positioning information, where the coordinate point corresponding to the second positioning information is located outside an area in which the at least one building is located.

In a possible implementation, the at least one road includes a first road, where the first road is located inside the first area.

In a possible implementation,
the at least one road further includes a second road, where the second road is located outside the first area and the second road intersects a first road; or
the at least one road further includes a third road, where the third road is located outside the first area and the third road intersects a second road.

In a possible implementation, the map topology information includes building topology information of at least one building corresponding to the first area. That the processing unit 901 is configured to correct the first positioning information based on the map topology information, to obtain second positioning information includes:
the processing unit 901 is configured to correct the first positioning information based on the building topology information, to obtain the second positioning information, where a coordinate point corresponding to the second positioning information is located outside an area in which the at least one building is located.

In a possible implementation, the at least one building includes a plurality of buildings, and the building topology information includes a connection relationship between the plurality of buildings.

In a possible implementation, the first information includes coordinate information corresponding to the first area, or the first information includes identification information of the first area, or the first information includes index information of the first area.

In a possible implementation, the positioning information processing apparatus 900 is configured to perform the method in any possible implementation corresponding to the second apparatus.

The transceiver unit 902 is configured to receive first information from a first apparatus, where the first information indicates a first area.

The processing unit 901 is configured to determine map topology information of the first area based on the first information.

The transceiver unit 902 is configured to send the map topology information to the first apparatus.

In a possible implementation, that the processing unit 901 is configured to determine map topology information of the first area based on the first information includes:
the processing unit 901 is configured to obtain geographic information system GIS map information corresponding to the first area, where the GIS map information includes coordinate point information corresponding to the first area; and
the processing unit 901 is configured to determine the map topology information based on the GIS map information.

In a possible implementation, the map topology information includes road topology information of at least one road corresponding to the first area, and the road topology information includes coordinate point information of the at least one road.

In a possible implementation, the road topology information further includes at least one of the following:
road width information of the at least one road; or
a connection relationship between a plurality of roads in the at least one road.

In a possible implementation, the at least one road includes a first road, where the first road is located inside the first area.

In a possible implementation,
the at least one road further includes a second road, where the second road is located outside the first area and the second road intersects a first road; or
the at least one road further includes a third road, where the third road is located outside the first area and the third road intersects a second road.

In a possible implementation, the map topology information includes building topology information of at least one building corresponding to the first area, and the building topology information includes coordinate point information of the at least one building.

In a possible implementation, the at least one building includes a plurality of buildings, and the building topology information includes a connection relationship between the plurality of buildings.

In a possible implementation, the first information includes coordinate information corresponding to the first area, or the first information includes identification information of the first area, or the first information includes index information of the first area.

It should be noted that, for content such as an information execution process of the unit related to the positioning information processing apparatus 900 and a corresponding technical effect, refer to descriptions in the foregoing method embodiments of this application. Details are not described herein again.

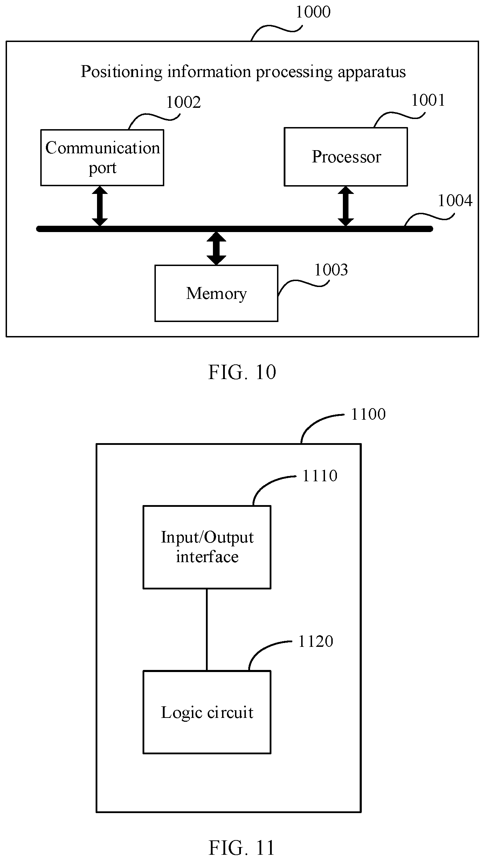

FIG. 10 is a schematic diagram of the positioning information processing apparatus in the foregoing embodiments according to an embodiment of this application. The positioning information processing apparatus shown in FIG. 10 may be the first apparatus or the second apparatus in the foregoing embodiments.

In a schematic diagram of a possible logical structure of the positioning information processing apparatus 1000, the positioning information processing apparatus 1000 may include but is not limited to at least one processor 1001 and a communication port 1002.

Optionally, the apparatus may further include at least one of a memory 1003 and a bus 1004. In this embodiment of this application, the at least one processor 1001 is configured to perform control processing on an action of the positioning information processing apparatus 1000.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the positioning information processing apparatus shown in FIG. 10 may be specifically configured to implement other steps implemented by the positioning information processing apparatus in the foregoing corresponding method embodiments, and implement a technical effect corresponding to the positioning information processing apparatus. For a specific implementation of the positioning information processing apparatus shown in FIG. 10, refer to descriptions in the foregoing method embodiments, and details are not described one by one herein again.

Refer to FIG. 11. An embodiment of this application further provides a communication apparatus 1100, which may be configured to implement functions of the first apparatus and the second apparatus in the foregoing method. The apparatus 1100 may be a chip in the first apparatus or the second apparatus. The communication apparatus 1100 includes:
at least one input/output interface 1110 and a logic circuit 1120, where the input/output interface 1110 may be an input/output circuit, and the logic circuit 1120 may be a signal processor, a chip, or another integrated circuit that can implement the method in this application.

The at least one input/output interface 1110 is configured to input or output a signal or data. For example, when the apparatus is the first apparatus, the input/output interface 1110 is configured to output first information or input map topology information of a first area. For example, when the apparatus is the second apparatus, the input/output interface 1110 is configured to input first information or output map topology information of a first area.

The logic circuit 1120 is configured to perform some or all steps of any method provided in embodiments of this application. For example, when the apparatus is the first apparatus, the apparatus is configured to perform steps performed by the first apparatus in various possible implementations in the foregoing method embodiments. For example, the logic circuit 1120 is configured to determine first positioning information corresponding to a location of the first apparatus. When the apparatus is the second communication apparatus, the apparatus is configured to perform steps performed by the second apparatus in various possible implementation methods in the foregoing method embodiments. For example, the logic circuit 1120 is configured to determine the map topology information of the first area based on the first information.

An embodiment of this application further provides a computer-readable storage medium that stores one or more computer-executable instructions. When the computer-executable instructions are executed by a processor, the processor performs the method in the possible implementations of the positioning information processing apparatus (for example, the first apparatus in the foregoing embodiments) in the foregoing embodiments.

An embodiment of this application further provides a computer-readable storage medium that stores one or more computer-executable instructions. When the computer-executable instructions are executed by a processor, the processor performs the method in the possible implementations of the positioning information processing apparatus (for example, the second apparatus in the foregoing embodiments) in the foregoing embodiments.

An embodiment of this application further provides a computer program product (or referred to as a computer program) that stores one or more computers. When the computer program product is executed by a processor, the processor performs the method in the possible implementations of the positioning information processing apparatus (for example, the first apparatus in the foregoing embodiments).

An embodiment of this application further provides a computer program product that stores one or more computers. When the computer program product is executed by a processor, the processor performs the method in the possible implementations of the positioning information processing apparatus (for example, the second apparatus in the foregoing embodiments).

An embodiment of this application further provides a chip system. The chip system includes at least one processor, configured to support a positioning information processing apparatus (for example, the first apparatus in the foregoing embodiments) in implementing functions in any one of the foregoing possible implementations. Optionally, the chip system further includes an interface circuit, and the interface circuit provides program instructions and/or data for the at least one processor. In a possible design, the chip system may further include a memory. The memory is configured to store program instructions and data that are necessary for the positioning information processing apparatus. The chip system may include a chip, or may include a chip and another discrete component.

An embodiment of this application further provides a chip system. The chip system includes at least one processor, configured to support a positioning information processing apparatus (for example, the second apparatus in the foregoing embodiments) in implementing functions in any one of the foregoing possible implementations. Optionally, the chip system further includes an interface circuit, and the interface circuit provides program instructions and/or data for the at least one processor. In a possible design, the chip system may further include a memory. The memory is configured to store program instructions and data that are necessary for the positioning information processing apparatus. The chip system may include a chip, or may include a chip and another discrete component.

An embodiment of this application further provides a communication system. The network system architecture includes the positioning information processing apparatus (including the first apparatus and the second apparatus) in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented based on some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, a part that essentially contributes to the technical solutions of this application or all or some of the technical solutions of this application may be embodied in a form of a software product. The computer software product is stored in a storage medium, and includes several instructions for enabling a computer device (which may be a personal computer, a server, a data processing device, or the like) to perform all or some steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A positioning information processing method, comprising:
determining, by a first apparatus, first positioning information corresponding to a location of the first apparatus, wherein a coordinate range of the first positioning information is in a first area;
sending, by the first apparatus, first information to a second apparatus, wherein the first information indicates the first area;
receiving, by the first apparatus, map topology information of the first area from the second apparatus; and
correcting, by the first apparatus, the first positioning information based on the map topology information, to obtain second positioning information.

2. The method according to claim 1, wherein the map topology information comprises road topology information of at least one road corresponding to the first area; and
the correcting, by the first apparatus, the first positioning information based on the map topology information, to obtain second positioning information comprises:
determining, by the first apparatus, target road topology information from the road topology information, wherein the target road topology information is road topology information of a road on which the location of the first apparatus is located; and
correcting, by the first apparatus, the first positioning information based on the target road topology information, to obtain the second positioning information.

3. The method according to claim 2, wherein the target road topology information comprises road width information of the road on which the location of the first apparatus is located; and
the correcting, by the first apparatus, the first positioning information based on the target road topology information, to obtain the second positioning information comprises:
correcting, by the first apparatus, the first positioning information based on the road width information in the first positioning information, to obtain the second positioning information, wherein a coordinate point corresponding to the second positioning information is located inside an area of the target road topology information.

4. The method according to claim 3, wherein the correcting, by the first apparatus, the first positioning information based on the road width information in the first positioning information, to obtain the second positioning information comprises:
correcting, by the first apparatus, the first positioning information based on movement orientation corresponding to the location of the first apparatus and the road width information, to obtain the second positioning information.

5. The method according to any one of claims 2 to 4, wherein the at least one road comprises a plurality of roads, and the road topology information comprises a connection relationship between the plurality of roads; and the determining, by the first apparatus, target road topology information from the road topology information comprises:
determining, by the first apparatus, the target road topology information from the road topology information based on the connection relationship between the plurality of roads.

6. The method according to any one of claims 2 to 5, wherein the map topology information further comprises building topology information of at least one building corresponding to the first area; and the correcting, by the first apparatus, the first positioning information based on the target road topology information, to obtain the second positioning information comprises:
correcting, by the first apparatus, the first positioning information based on the target road topology information, to obtain third positioning information; and
correcting, by the first apparatus, the third positioning information based on the building topology information, to obtain the second positioning information, wherein the coordinate point corresponding to the second positioning information is located outside an area in which the at least one building is located.

7. The method according to any one of claims 2 to 6, wherein the at least one road comprises at least one of the following:
a first road, wherein the first road is located inside the first area;
a second road, wherein the second road is located outside the first area and the second road intersects a first road; or
a third road, wherein the third road is located outside the first area and the third road intersects a second road.

8. The method according to claim 1, wherein the map topology information comprises building topology information of at least one building corresponding to the first area; and the correcting, by the first apparatus, the first positioning information based on the map topology information, to obtain second positioning information comprises:
correcting, by the first apparatus, the first positioning information based on the building topology information, to obtain the second positioning information, wherein a coordinate point corresponding to the second positioning information is located outside an area in which the at least one building is located.

9. The method according to any one of claims 6 to 8, wherein the at least one building comprises a plurality of buildings, and the building topology information comprises a connection relationship between the plurality of buildings.

10. The method according to any one of claims 1 to 9, wherein the first information comprises coordinate information corresponding to the first area, the first information comprises identification information of the first area, or the first information comprises index information of the first area.

11. A positioning information processing method, comprising:
receiving, by a second apparatus, first information from a first apparatus, wherein the first information indicates a first area;
determining, by the second apparatus, map topology information of the first area based on the first information; and
sending, by the second apparatus, the map topology information to the first apparatus.

12. The method according to claim 11, wherein the determining, by the second apparatus, map topology information of the first area based on the first information comprises:
obtaining, by the second apparatus, geographic information system GIS map information corresponding to the first area, wherein the GIS map information comprises coordinate point information corresponding to the first area; and
determining, by the second apparatus, the map topology information based on the GIS map information.

13. The method according to claim 12, wherein the map topology information comprises road topology information of at least one road corresponding to the first area.

14. The method according to claim 13, wherein the road topology information further comprises at least one of the following:
road width information of the at least one road; or
a connection relationship between a plurality of roads in the at least one road.

15. The method according to claim 13 or 14, wherein the at least one road comprises at least one of the following:
a first road, wherein the first road is located inside the first area;
a second road, wherein the second road is located outside the first area and the second road intersects a first road; or
a third road, wherein the third road is located outside the first area and the third road intersects a second road.

16. The method according to any one of claims 11 to 15, wherein the map topology information comprises building topology information of at least one building corresponding to the first area.

17. The method according to claim 16, wherein the at least one building comprises a plurality of buildings, and the building topology information comprises a connection relationship between the plurality of buildings.

18. The method according to any one of claims 11 to 17, wherein the first information comprises coordinate information corresponding to the first area, the first information comprises identification information of the first area, or the first information comprises index information of the first area.

19. A first apparatus, comprising a processing unit and a transceiver unit, wherein the processing unit and the transceiver unit are configured to perform the method according to any one of claims 1 to 10.

20. A second apparatus, comprising a processing unit and a transceiver unit, wherein the processing unit and the transceiver unit are configured to perform the method according to any one of claims 11 to 18.

21. A positioning information processing apparatus, comprising at least one processor, wherein the at least one processor is coupled to a memory;
the memory is configured to store a program or instructions; and
the at least one processor is configured to execute the program or the instructions, to enable the apparatus to implement the method according to any one of claims 1 to 10 or implement the method according to any one of claims 11 to 18.

22. A computer-readable storage medium, wherein the readable storage medium stores instructions, and when the instructions are executed by a computer, the method according to any one of claims 1 to 10 is performed or the method according to any one of claims 11 to 18 is performed.

23. A computer program product, wherein the program product comprises instructions, and when the instructions are run on a computer, the method according to any one of claims 1 to 10 is performed or the method according to any one of claims 11 to 18 is performed.
